# EUROPEAN PATENT APPLICATION

(11) **EP 4 745 066 A1**
(43) Date of publication of application: **20.05.2026**
(21) Application number: 25747875.0
(22) Date of filing: 24.01.2025
(51) Int. Cl.: B65G 54/02

(54) **MOVER AND MAGNETIC DRIVE CONVEYING SYSTEM COMPRISING SAME**

(30) Priority: 31.01.2024 CN 202410139391
(71) Applicant: Shanghai Golytec Automation Co., Ltd., Shanghai 201100 (CN)
(72) Inventor: CHI, Feng, Shanghai 201100 (CN); GUO, Lin, Shanghai 201100 (CN); CHEN, Zenghui, Shanghai 201100 (CN); YANG, Tao, Shanghai 201100 (CN)
(74) Representative: Huang, Liwei
(86) International application number: PCT/CN2025/074907
(87) International publication number: WO 2025/162307

(57) **Abstract**

A mover and a magnetic drive conveying system with the same are disclosed. The mover includes: a base plate, having a first surface and a second surface which are arranged opposite to each other, where the first surface faces a stator of the magnetic drive conveying system, and the second surface faces away from the stator of the magnetic drive conveying system; a first permanent magnet array, arranged on the first surface; retractable guiding members, arranged in a retractable manner on the base plate, and protruding beyond the first surface when in an extended state, with a projection of the retractable guiding member beyond the first surface when in the extended state greater than a projection beyond the first surface when in a retracted state; and first rollers, rotatably arranged on the base plate and protruding beyond the first surface, where the rotational axes of the first rollers are perpendicular to a moving direction of a mover and parallel to the first surface and the second surface. The mover in the embodiment of the present disclosure is applied to the magnetic drive conveying system. By changing the extended and retracted state of the retractable guiding members, the switching of the mover can be achieved, thereby simplifying the structure of the magnetic drive conveying system and reducing its volume.

## Description

### CROSS-REFERENCE TO RELATED APPLICATIONS

This application claims priority to Chinese Patent Application CN202410139391.9, entitled "MOVER AND MAGNETIC DRIVE CONVEYING SYSTEM WITH SAME", filed with the China Patent Office on January 31, 2024, the entire contents of which are hereby incorporated by reference.

### TECHNICAL FIELD

The present disclosure relates to the technical field of conveying devices, and in particular, to a mover and a magnetic drive conveying system with same.

### BACKGROUND

The use of magnetic levitation technology for workpiece conveying offers characteristics such as high conveying speed, low maintenance cost, and high flexibility, gaining favor with an increasing number of customers. In application scenario of magnetic levitation conveying lines, there is often a need for divergence of a single track or confluence of a plurality of tracks.

In related technologies, a deflection device is arranged on a side of a mover to achieve the switching of the mover, which results in a complex structure and a large volume for a magnetic drive conveying system.

### SUMMARY

The objective of the present disclosure is to provide a mover and a magnetic drive conveying system with the same, applied to magnetic drive conveying systems. By changing the extended and retracted states of a retractable guiding member, the switching of the mover can be achieved, thereby simplifying the structure of the magnetic drive conveying system and reducing its volume.

In order to achieve the above objective, an embodiment of a first aspect of the present disclosure provides a mover for a magnetic drive conveying system, which includes: a base plate, having a first surface and a second surface which are arranged opposite to each other, where the first surface faces a stator of the magnetic drive conveying system, and the second surface faces away from the stator of the magnetic drive conveying system; a first permanent magnet array, arranged on the first surface; retractable guiding members, arranged in a retractable manner on the base plate, and protruding beyond the first surface when in an extended state, with a projection of the retractable guiding member beyond the first surface when in the extended state greater than a projection beyond the first surface when in a retracted state; and first rollers, rotatably arranged on the base plate and protruding beyond the first surface, where the rotation axes of the first rollers are perpendicular to a movement direction of the mover and parallel to the first surface and the second surface.

An embodiment of a second aspect of the present disclosure proposes a magnetic drive conveying system, which includes: the mover according to the embodiment of the first aspect of the present disclosure; and a stator, including tracks, where the track includes an armature winding which, when energized, magnetically couples with the first permanent magnet array to drive the mover to move along the track.

In the magnetic drive conveying system of the present disclosure, the mover is provided with the retractable guiding members that can be extended and retracted. The retractable guiding member, when in the extended state, may be inserted into a slot of the stator of the magnetic drive conveying system to fix the relative position between the mover and the stator and prevent the mover from detaching from the stator; and when in the retracted state, may move out of the slot of the stator of the magnetic drive conveying system, at which point the mover can switch, thereby eliminating the need for additional deflection devices, simplifying the structure of the magnetic drive conveying system, and reducing its volume.

### BRIEF DESCRIPTION OF THE DRAWINGS

In order to more clearly illustrate the technical solution in embodiments of the present disclosure or the prior art, the following will briefly introduce the accompanying drawings used in the description of the embodiments or the prior art. Apparently, the accompanying drawings described below are merely some of the embodiments of the present disclosure, and those of ordinary skill in the art can also obtain other drawings according to structures shown in these drawings without making creative efforts.
FIG. 1 is a schematic structural diagram of a conveying device according to an embodiment of the present disclosure.
FIG. 2 is a first schematic structural diagram of a mover according to an embodiment of the present disclosure.
FIG. 3 is a second schematic structural diagram of the mover according to an embodiment of the present disclosure.
FIG. 4 is an exploded view of the mover according to an embodiment of the present disclosure.
FIG. 5 is a first sectional view of the mover according to an embodiment of the present disclosure.
FIG. 6 is a second sectional view of the mover according to an embodiment of the present disclosure.
FIG. 7 is a sectional view of a base plate of the mover according to an embodiment of the present disclosure.
FIG. 8 is a schematic structural diagram of a retractable guiding member of the mover according to an embodiment of the present disclosure.
FIG. 9 is a schematic structural diagram of a retractable portion of the retractable guiding member of the mover according to an embodiment of the present disclosure.
FIG. 10 is a first schematic structural diagram of a track switching stator according to an embodiment of the present disclosure.
FIG. 11 is a second schematic structural diagram of a track switching stator according to an embodiment of the present disclosure.
FIG. 12 is a third schematic structural diagram of a track switching stator according to an embodiment of the present disclosure.

Description of reference numerals:
track switching stator 1; mover 2; magnetic drive conveying system 3; first permanent magnet array 6; retractable guiding member 7;
base plate 10; first surface 10a; second surface 10b; third surface 10c; first mounting cavity 13; first cavity 13a; second cavity 13b; first sub-cavity 1311; second sub-cavity 1312; first opening 14; second opening 15; second mounting cavity 16; third opening 17; fourth opening 18; weight-reducing groove 19;
base 100; converging end 101; first diverging end 102; second diverging end 103; third diverging end 104;
first conveying track 200; first armature winding 210;
second conveying track 300; second armature winding 310;
first guiding member 410; first slot 411; first stop shoulder 412; first abutment shoulder 413; second guiding member 420; second slot 421; second stop shoulder 422; second abutment shoulder 423; first retractable element 430; second retractable element 440;
first retractable guiding member 610; second retractable guiding member 620; mounting portion 630; mounting seat 631; guiding shaft 632; first positioning structure 633; retractable portion 640; limiting segment 641; guiding segment 642; second positioning structure 643;
third conveying track 700; third armature winding 710; third guiding member 720; third stop shoulder 721; third abutment shoulder 722; third slot 730; third retractable element 731;
first roller 900.

The implementation, functional characteristics and advantages of the objective of the present disclosure will be further illustrated with reference to the embodiments and the accompanying drawings.

### DETAILED DESCRIPTION OF THE EMBODIMENTS

In order to make the objective, technical solutions and advantages of the present disclosure clearer, the following detailed description will be given to implementations of the present disclosure with reference to the accompanying drawings.

When the following description involves the accompanying drawings, unless otherwise indicated, the same numerals in different accompanying drawings represent the same or similar elements. The implementations described in the following embodiments do not represent all implementations consistent with the present disclosure. Rather, they are merely examples of devices and methods consistent with certain aspects of the present disclosure, as detailed in the appended claims.

In the description of the present disclosure, it should be understood that terms such as "first" and "second" are merely for descriptive purposes and cannot be construed as indicating or implying relative importance. Those of ordinary skill in the art can understand the specific meaning of the aforementioned terms in the present disclosure according to specific conditions. In addition, in the description of the present disclosure, "a plurality of" means two or more, unless otherwise specified. The term "and/or" describes the relationship between associated objects, and indicates that there may be three relationships. For example, A and/or B can indicate that: A exists alone, both A and B exist, or B exists alone. The character "/" generally indicates that the associated objects before and after are in an "or" relationship.

Unless otherwise defined, all technical and scientific terms used herein have the same as commonly understood by those skilled in the art to which the present disclosure belongs. The terms used in the present specification are merely for the purpose of describing specific embodiments and are not intended to limit the present disclosure. The term "and/or" used herein includes any and all combinations of one or more related listed items.

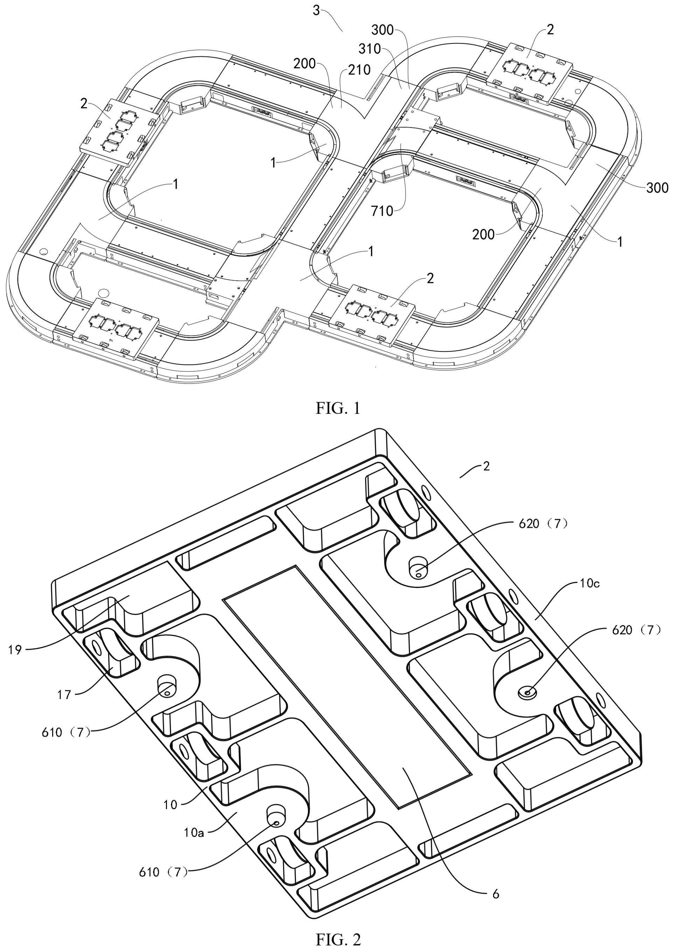

As shown in FIG. 1, a magnetic drive conveying system 3 usually includes a mover 2 and a stator. One of the mover 2 and the stator is provided with a coil, and the other is provided with a permanent magnet. By generating a traveling wave magnetic field through the excitation of coil current, the traveling wave magnetic field is magnetically coupled to the permanent magnet to achieve the movement of the mover 2 relative to the stator, and the transmission function is realized by arranging a carrier on the mover 2.

In the application scenario of the magnetic drive conveying system 3, there is often a need for the divergence of a single track or the confluence of a plurality of tracks. In the prior art, a separate transfer mechanism, such as a turntable and a cross-moving platform, is arranged. The transfer mechanism first docks with a track outputting workpiece, and after a workpiece moves onto the transfer mechanism, the transfer mechanism turns or moves to dock with a track inputting workpieces, thereby transferring the workpiece from the output track to the input track. In this process, the transfer mechanism needs to dock with the output track and the input track, which requiring high docking accuracy, which leads to slow docking speed, and consequently, greatly affects the conveying efficiency of the conveying.

In other technologies, a deflection device is arranged on a side of the mover 2 to achieve the switching of the mover 2, resulting in a complex structure and a large volume, and occupying a large space for the magnetic drive conveying system 3.

In the magnetic drive conveying system 3 of the present disclosure, the mover 2 is provided with retractable guiding members 7 that can be extended and retracted. The retractable guiding member 7, when in an extended state, may be inserted into a slot of the stator of the magnetic drive conveying system 3 to fix the relative position between the mover 2 and the stator and prevent the mover 2 from detaching from the stator; and when in a retracted state, may move out of the slot of the stator of the magnetic drive conveying system 3, at which point the mover 2 can switch, thereby eliminating the need for additional deflection devices, simplifying the structure of the magnetic drive conveying system 3 and reducing its volume.

The mover 2 according to an embodiment of the present disclosure will be described below with reference to the accompanying drawings.

As shown in FIGS. 2 to 6, the mover 2 according to the embodiment of the present disclosure is used in the magnetic drive conveying system 3. The mover 2 includes a base plate 10, a first permanent magnet array 6, retractable guiding members 7, and first rollers 900.

The base plate 10 has a first surface 10a and a second surface 10b which are arranged opposite to each other. The first surface 10a faces the stator of the magnetic drive conveying system 3, and the second surface 10b faces away from the stator of the magnetic drive conveying system 3. The first permanent magnet array 6 is arranged on the first surface 10a.

The first surface 10a is configured to provide a foundation for the arrangement of the first permanent magnet array 6, and the second surface 10b is usually configured to carry an object.

The stator has an armature winding, and the first permanent magnet array 6 may be a permanent magnet. When the mover 2 runs on the stator, the armature winding is periodically energized in a phase sequence, and the first permanent magnet array 6 is magnetically coupled to the armature windings to the mover 2 to move along the stator. By changing the phase sequence of the armature winding, the direction of a driving force received by the mover 2 can be changed, thereby changing the movement direction of the mover 2.

The first permanent magnet array 6 generates a constant magnetic field around the mover 2. By controlling the direction and magnitude of the current in the armature winding, a changing traveling wave magnetic field can be generated in the armature winding. This changing traveling wave magnetic field interacts with the constant magnetic field of the first permanent magnet array 6 to drive the mover 2 to move. By controlling the change of the traveling wave magnetic field, the movement direction of the mover 2 is controlled, thereby achieving the switching of the mover 2.

By arranging the first permanent magnet array 6 on the first surface 10a, since the first surface 10a is close to the stator, the driving force generated by the magnetic coupling between the first permanent magnet array 6 and the armature windings of the stator can be increased, thereby enhancing the motion stability and increasing the motion speed of the mover 2.

In addition, the retractable guiding member 7 is arranged in a retractable manner on the base plate 10. The extension and retraction direction of the retractable guiding member 7 is a thickness direction of the base plate 10, and may be perpendicular to the first surface 10a and the second surface 10b. The first surface 10a and the second surface 10b are parallel to each other. The retractable guiding member 7, when in the extended state, protrudes beyond the first surface 10a, and a projection of the retractable guiding member 7 beyond the first surface 10a when in the extended state is greater than a projection beyond the first surface 10a when in the retracted state.

It should be noted that the retractable guiding member 7, when in the retracted state, may protrude beyond the first surface 10a. That is, on the basis of protruding beyond the first surface 10a, the retractable guiding member 7 is disengaged from the slot of the stator, thereby not being guided by the slot of the stator; or the retractable guiding members 7 may not protrude beyond the first surface 10a to more stably disengage from the slot of the stator.

The retractable guiding member 7, when in the extended state, may be inserted into the slot of the stator to allow the mover 2 to move along the extension direction of the slot of the stator; and when in the retracted state, may move out of the slot of the stator to allow the mover 2 to change the movement direction.

In addition, the first rollers 900 are rotatably arranged on the base plate 10 and protrude beyond the first surface 10a, and the rotational axes of the first rollers 900 are perpendicular to the movement direction of the mover 2 and parallel to the first surface 10a and the second surface 10b.

For example, the first roller 900 is located outside the slot of the stator, and may come into contact with the outer surface of the stator. On one hand, during the movement of the mover 2 along the stator, the first rollers 900 can provide a supporting force for the mover 2 to ensure that the base plate 10 of the mover 2 and the stator are spaced apart and maintain a stable distance, and the base plate 10 of the mover 2 and the stator do not approach or move away from each other; and on the other hand, the relative friction between the mover 2 and the stator can be reduced, increasing the motion speed and enhancing motion stability of the mover 2.

In some embodiments of the present disclosure, as shown in FIGS 2 to 6, the base plate 10 has at least one first roller 900 and at least one retractable guiding member 7 on each side in its width direction. That is, the base plate 10 has one or more first rollers 900 on each side in its width direction and has one or more retractable guiding members 7 on each side in its width direction. The width direction, thickness direction and movement direction of the base plate 10 are perpendicular to one another, and the number of the first rollers 900 on both sides in the width direction of the base plate 10 is the same, and the number of the retractable guiding members 7 on both sides in the width direction of the base plate 10 is the same. Arranging the plurality of first rollers 900 on both sides in the width direction of the base plate 10 ensures uniform force on both sides in the width direction of the mover 2, preventing the mover 2 from deflecting and ensuring stable movement. Arranging the plurality of retractable guiding members 7 on both sides in the width direction of the base plate 10 improves the diversity of the switching of the mover 2, such as selecting the extension and retraction of the retractable guiding member 7 on any side according to a working condition. Preferably, the first rollers 900 and the retractable guiding members 7 are symmetrically arranged on both sides in the width direction of the base plate 10 to further improve the movement stability and switching stability of the mover 2.

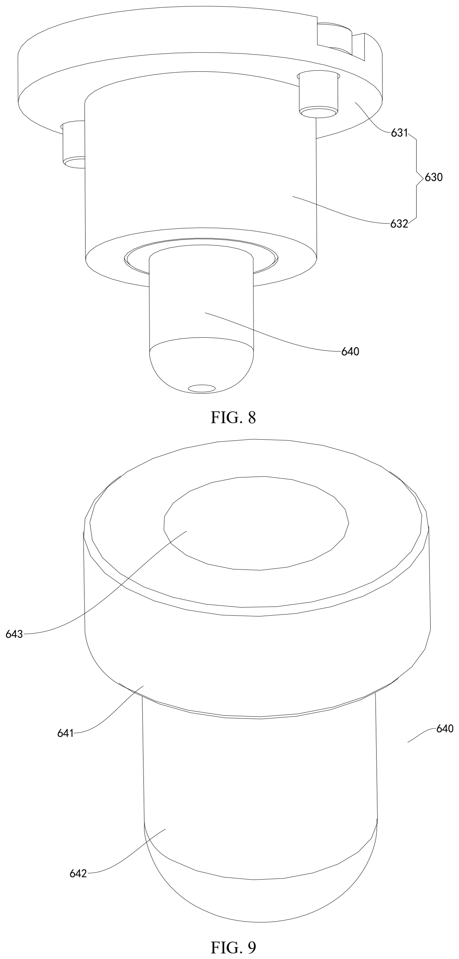

In some embodiments of the present disclosure, as shown in FIGS. 2 to 8, the base plate 10 is provided with first mounting cavities 13 and first openings 14, where the first openings 14 are arranged in the first surface 10a and communicate with the first mounting cavities 13, and the retractable guiding members 7 are arranged in the first mounting cavities 13 and protrude beyond the first surface 10a through the first openings 14.

By arranging the first mounting cavities 13, the retractable guiding members 7 can be mounted in the first mounting cavities 13. The retractable guiding member 7, when in the retracted state, may be completely accommodated in the first mounting cavity 13, and at which point the retractable guiding member 7 does not protrude beyond the first surface 10a, so that the probability of the mover getting stuck between the retractable guiding member 7 and the stator is lower when switching, making switching easier. Moreover, the arrangement of the first mounting cavity 13 also improves the mounting stability of the retractable guiding member 7, protects the retractable guiding member 7 to smoothly realize the extension and retraction functions, and protects the retractable guiding member 7 to a certain extent from being hit by foreign objects.

By arranging the first opening 14, the retractable guiding member 7 can protrude beyond the first surface 10a through the first openings 14, so that the retractable guiding member 7 may be inserted into the slot of the stator to allow the mover 2 to move along the extension direction of the slot and reduce the probability of the mover 2 detaching from the stator.

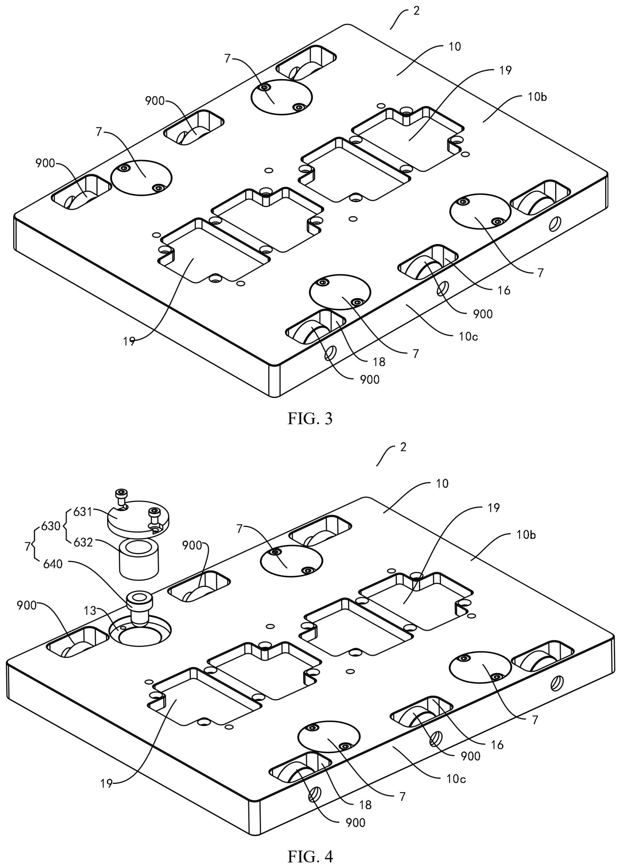

Further, as shown in FIGS. 4 to 8, the base plate 10 is provided with second openings 15, which are arranged in the second surface 10b. The first mounting cavity 13 includes a first cavity 13a and a second cavity 13b, where the first cavity 13a communicates with the first opening 14, the second cavity 13b communicates between the first cavity 13a and the second opening 15, and a cross-sectional area of the second cavity 13b orthographically projected onto the first surface 10a is larger than that of the first cavity 13a orthographically projected onto the first surface 10a.

The retractable guiding member 7 includes a mounting portion 630 and a retractable portion 640, where the retractable portion 640 is connected in a retractable manner to the mounting portion 630, and the mounting portion 630 is located in the second cavity 13b and connected to an inner wall of the second cavity 13b. When the retractable guiding member 7 is in the extended state, the retractable portion 640 passes through the first cavity 13a and protrudes beyond the first surface 10a from the first opening 14.

Specifically, the retractable guiding member 7 may be placed into the first mounting cavity 13 through the second opening 15 until the mounting portion 630 is stopped against the bottom wall of the second cavity 13b, at which point the retractable guiding member 7 is properly mounted with respect to the base plate 10, thereby facilitating the mounting of the retractable guiding member 7. By connecting the mounting portion 630 to the inner wall of the second cavity 13b, the retractable guiding members 7 and the base plate 10 can be prevented from being separated from each other, ensuring reliable cooperation between the retractable guiding member 7 and the slot of the stator during the movement of the mover 2 to guide the mover 2 and prevent the mover 2 from detaching from the stator.

By arranging the retractable portion 640, the retractable portion 640 can extend and retract relative to the mounting portion 630. That is, the mounting portion 630 can serve as a guide for the retractable portion 640. When the retractable portion 640 is not under force, the retractable guiding member 7 remains in the extended state, and the retractable portion 640 is inserted into the slot of the stator to allow the mover 2 to move along the extension direction of the slot of the stator. When the retractable portion 640 is under force, the retractable portion 640 can retract into the first mounting cavity 13, the retractable guiding member 7 is switched to the retracted state, and the retractable portion 640 moves out of the slot of the stator, allowing the mover 2 to switch relative to the stator and move in a different direction.

Further, as shown in FIGS. 4 to 8, the second cavity 13b includes a first sub-cavity 1311 and a second sub-cavity 1312. The first sub-cavity 1311 communicates with the first cavity 13a, the second sub-cavity 1312 communicates between the first sub-cavity 1311 and the second opening 15, and a cross-sectional area of the second sub-cavity 1312 orthographically projected onto the first surface 10a is larger than that of the first sub-cavity 1311 orthographically projected onto the first surface 10a.

The mounting portion 630 includes a mounting seat 631 and a guiding shaft 632. The retractable portion 640 is connected in a retractable manner to the guiding shaft 632, and the mounting base 631 is located in the second sub-cavity 1312 and connected to the bottom wall of the second sub-cavity 1312. For example, the mounting seat 631 may be connected to the bottom wall of the second sub-cavity 1312 through a threaded fastener (a screw or a bolt), or the mounting seat 631 may be riveted to the bottom wall of the second sub-cavity 1312 through a rivet. The guiding shaft 632 is located in the first sub-cavity 1311 and stopped against the bottom wall of the first sub-cavity 1311.

In this way, when the mounting portion 630 is stopped against the bottom wall of the second sub-cavity 1312, the retractable guiding member 7 is properly mounted with respect to the base plate 10. By connecting the mounting seat 631 to the bottom wall of the second sub-cavity 1312, the retractable guiding member 7 and the base plate 10 can be prevented from being separated from each other, ensuring reliable cooperation between the retractable guiding member 7 and the slot of the stator during the movement of the mover 2 to guide the mover 2 and prevent the mover 2 from detaching from the stator.

By arranging the guiding shaft 632, the movement of the retractable portion 640 can be guided, providing a larger displacement space for the retractable portion 640 in an axial direction of the guiding shaft 632. A cross-sectional area of the guiding shaft 632 orthographically projected onto the first surface 10a is smaller than that of the mounting base 631 orthographically projected onto the first surface 10a, thereby reducing costs while ensuring the stability of mounting.

In some embodiments of the present disclosure, the guiding shaft 632 is a linear bearing, an inner ring surface of the linear bearing is drivingly connected to the retractable portion 640; or the guiding shaft 632 includes a shaft sleeve and a linear bearing, where an outer ring surface of the linear bearing is connected to an inner ring surface of the shaft sleeve, and the inner ring surface of the linear bearing is drivingly connected to the retractable portion 640.

In this way, the guiding shaft 632 can be constructed in more diverse ways, which is beneficial for expanding the selection range for the guiding shaft 632, making the mover 2 applicable to a wider range of scenarios and suitable for different scenes.

By making the guiding shaft 632 include the linear bearing, balls of the linear bearing may be located on an inner peripheral surface of the guiding shaft 632 to enable the relative movement between the retractable portion 640 and the guiding shaft 632. The retractable portion 640 and the guiding shaft 632 can move relative to each other along circumferential and axial directions of the guiding shaft 632.

By enabling the retractable portion 640 and the guiding shaft 632 to move relative to each other along the axial direction of the guiding shaft 632, the retractable guiding members 7 can be switched between the extended state and the retracted state, thereby achieving the switching of the mover 2.

When the retractable portion 640 is inserted into the slot of the stator, friction may occur between the retractable portion 640 and the wall of the slot when it is inserted into the slot. By enabling the retractable portion 640 and the guiding shaft 632 to rotate relative to each other along the circumferential direction of the guiding shaft 632, the friction between the retractable portion 640 and the wall of the slot can be reduced, as well as the service life of the retractable guiding member 7 can be prolonged, thereby increasing the movement speed of the mover 2 and making the movement the mover 2 smoother.

When the guiding shaft 632 is a linear bearing, the linear bearing is fixedly connected to the mounting base 631, for example, the linear bearing and the mounting seat 631 may be formed into an integrated structure, which is convenient for processing and has high structural strength; or the linear bearing is interference-fitted with the first sub-cavity 1311, at this point, the linear bearing and the mounting seat 631 may be arranged separately, so that when one of the linear bearing and the mounting base 631 is damaged, there is no need to replace the other one together, reducing the maintenance cost; or the linear bearing is clamped between the mounting base 631 and the bottom wall of the first sub-cavity 1311, that is, the mounting base 631 and the bottom wall of the first sub-cavity 1311 apply clamping force to the linear bearing from both ends in the axial direction of the linear bearing to fix the position of the linear bearing. In this way, after the mounting seat 631 is disassembled, the linear bearing can be conveniently disassembled, increasing the disassembly convenience of the mover 2 and facilitating subsequent maintenance.

When the guiding shaft 632 includes a shaft sleeve and a linear bearing, the linear bearing is interference-fitted with the shaft sleeve to fix the relative position between the linear bearing and the shaft sleeve.

The shaft sleeve may be fixedly connected to the mounting seat 631, for example, the shaft sleeve and the mounting seat 631 may be formed into an integrated structure, which is convenient for processing and has high structural strength; or the shaft sleeve is interference-fitted with the first sub-cavity 1311, at this point, the shaft sleeve and the mounting base 631 may be arranged separately, so that when one of the shaft sleeve and the mounting base 631 is damaged, there is no need to replace the other one together, reducing the maintenance cost; or the shaft sleeve is clamped between the mounting seat 631 and the bottom wall of the first sub-cavity 1311, that is, the mounting seat 631 and the bottom wall of the first sub-cavity 1311 apply clamping force ton the shaft sleeve from both ends in the axial direction of the shaft sleeve to fix the position of the shaft sleeve. In this way, after the mounting seat 631 is disassembled, the shaft sleeve can be conveniently disassembled, increasing the disassembly convenience of the mover and facilitating subsequent maintenance.

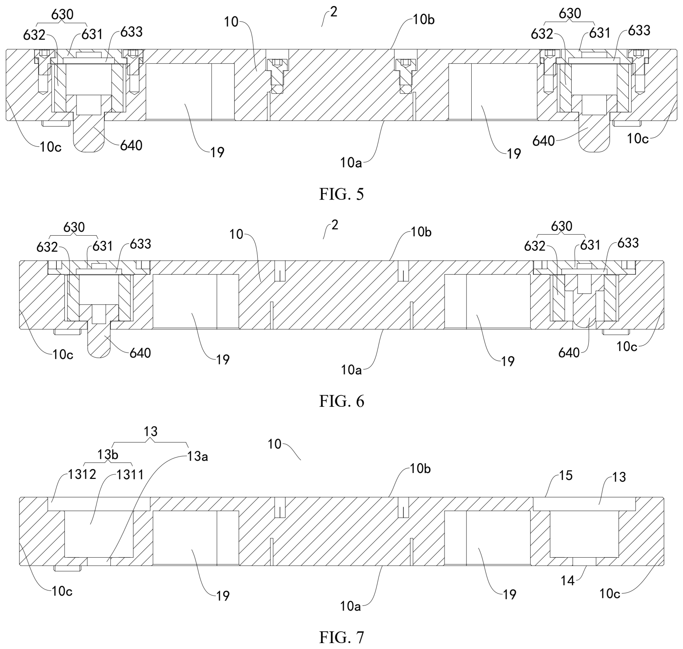

In some embodiments of the present disclosure, as shown in FIGS. 5, 6 and 9, the retractable portion 640 includes a limiting segment 641 and a guiding segment 642, where the limiting segment 641 is inserted into the guiding shaft 632 and stopped against the bottom wall of the second cavity 13b, and the guiding segment 642 is connected to the limiting segment 641. When the retractable guiding member 7 is in the extended state, the guiding segment 642 protrudes beyond the first surface 10a from the first opening 14.

For example, the cross-sectional outline of the limiting segment 641 is circular, and the cross-sectional outline of the guiding segment 642 is circular. In this way, the retractable portion 640 can be more conveniently mounted, and there is no need to mount the retractable portion 640 and the guiding shaft 632 at a characteristic angle.

By dividing the retractable portion 640 into the limiting segment 641 and the guiding segment 642, the limiting segment 641 can be stopped against the bottom wall of the second cavity 13b to define the maximum displacement stroke between the retractable portion 640, the guiding shaft 632 and the base plate 10, thereby preventing the retractable portion 640 from being separated from the guiding shaft 632 and the base plate 10. The guiding segment 642 can freely move in the first opening 14, facilitating the protrusion of retractable portion 640 beyond the first surface 10a and insertion into the slot of the stator to achieve the movement guidance of the stator on the mover 2; and the retractable portion 640 can move out of the slot of the stator to achieve the switching of the mover 2.

The aforementioned limiting segment 641 includes a linear bearing, the outer ring surface of the linear bearing is in contact with the inner ring surface of the guiding shaft 632, and the limiting segment 641 is slidable relative to the guiding shaft 632. The limiting segment 641 may be entirely a linear bearing, or the limiting segment 641 may be partially a linear bearing.

By making at least a part of the limiting segment 641 a linear bearing, balls of the linear bearing may be located on the outer ring surface of the limiting segment 641 to allow for the relative movement between the limiting segment 641 and the guiding shaft 632. The limiting segment 641 and the guiding shaft 632 can move relative to each other along the circumferential and axial directions of the guiding shaft 632.

By enabling the limiting segment 641 and the guiding shaft 632 to move relative to each other along the axial direction of the guiding shaft 632, the retractable guiding members 7 can be switched between the extended state and the retracted state, thereby achieving the switching of the mover 2 on a track switching stator 1.

When the retractable portion 640 is inserted into the slot of the stator, friction may occur between the retractable portion 640 and the wall of the slot when it is inserted into the slot. By enabling the limiting segment 641 and the guiding shaft 632 to rotate relative to each other along the circumferential direction of the guiding shaft 632, the friction between the retractable portion 640 and the wall of the slot can be reduced, as well as the service life of the retractable guiding member 7 can be prolonged, thereby increasing the movement speed of the mover 2 and making the movement of the mover 2 smoother.

Further, the retractable guiding member 7 further includes an elastic member (not shown in the figure), where the elastic member may be a spring or other parts that can undergo elastic deformation. The elastic member is located in the guiding shaft 632, one end of the elastic member is stopped against the limiting segment 641, the other end of the elastic member is stopped against the guiding shaft 632 or the mounting seat 631, and the elastic member is compressed to have an elastic force that drives the retractable portion 640 to protrude beyond the first surface 10a.

For example, the inner wall of the guiding shaft 632 is provided with a stop step (not shown in the figure), one end of the elastic member is stopped against the limiting segment 641, and the other end of the elastic member is stopped against the stop step of the guiding shaft 632; or one end of the elastic member is stopped against the limiting segment 641, and the other end of the elastic member is stopped against the mounting seat 631.

When the retractable guiding member 7 is in the extended state, that is, when the limiting segment 641 is stopped against the bottom wall of the second cavity 13b, the elastic member is also in a compressed state (that is, the length of the elastic member at this time is still less than that of the elastic member in its natural state), and the elastic member applies elastic force to the retractable portion 640. Therefore, the retractable guiding member 7 can stably remain in the extended state when the retractable portion 640 is not subjected to external force, preventing the mover 2 from detaching from the stator.

By arranging the elastic members, the retractable guiding member 7 can be kept in the extended state when the mover 2 is not subjected to external force, ensuring that the retractable guiding member 7 is in the extended state in its natural state, thereby avoiding accidental retraction of the retractable portions 640; and when the mover 2 is subjected to external force and the retractable guiding member 7 is in the retracted state, once the external force disappears, the elastic force immediately pushes the retractable guiding member 7 back to the extended state. In this way, the retractable portion 640 can be reliably inserted into the slot of the stator except during the switching process of the mover 2, decreasing the probability of the mover 2 detaching from the stator and improving the motion stability of the mover 2.

Further, as shown in FIGS. 5, 6 and 9, an end face of the mounting seat 631 facing the guiding shaft 632 is provided with a first positioning structure 633, and an end face of the limiting segment 641 facing the mounting seat 631 is provided with a second positioning structure 643. One end of the elastic member is connected to the first positioning structure 633, and the other end is connected to the second positioning structure 643.

By arranging the first positioning structure 633, the relative position between the mounting seat 631 and the elastic member can be fixed. By arranging the second positioning structure 643, the relative position between the limiting segment 641 and the elastic member can be fixed, that is, the relative position between the retractable portion 640 and the elastic member can be fixed. The inner wall of the guiding shaft 632 can limit the deflection stoke of the elastic member, thereby ensuring that the deformation, deflection and displacement of the elastic member do not exceed expectations, which makes the acting force applied to the retractable portion 640 by the elastic member meet expectation and ensures that the retractable element can be effectively and quickly reset.

Further, as shown in FIGS. 5, 6 and 9, the first positioning structure 633 is at least one of a positioning groove and a positioning post. That is, the first positioning structure 633 may be a positioning groove, in this case, the end of the elastic member is inserted into the positioning groove, and the wall of the positioning groove limits the end of the elastic member; or the first positioning structure 633 may be a positioning post, in this case, the end of the elastic member is sleeved on the positioning post, and the positioning post limits the end of the elastic member; or the first positioning structure 633 may include a positioning post and a positioning groove, where the positioning post is arranged at the bottom of the positioning groove, in this case, the end of the elastic member is inserted into the positioning groove and sleeved on the positioning post, and the wall of the positioning groove and the positioning post jointly limit the end of the elastic member.

In this way, the position of an end of the elastic member facing the first positioning structure 633 in the mover 2 can be fixed, preventing displacement of the end of the elastic member facing the first positioning structure 633, thereby ensuring the reliability of the reset of the retractable guiding member 7 by the elastic member.

The second positioning structure 643 is at least one of a positioning groove and a positioning post. That is, the second positioning structure 643 may be a positioning grooves, in this case, the end of the elastic member is inserted into the positioning groove, and the wall of the positioning groove limits the end of the elastic member; or the second positioning structure 643 may be a positioning post, in this case, the end of the elastic member is sleeved on the positioning post, and the positioning post limits the end of the elastic member; or the second positioning structure 643 may include a positioning post and a positioning groove, where the positioning post is arranged at the bottom of the positioning recess, in this case, the end of the elastic member is inserted into the positioning groove and sleeved on the positioning post, and the wall of the positioning groove and the positioning post jointly limit the end of the elastic member.

In this way, the position of an end of the elastic member facing the second positioning structure 643 in the mover 2 can be fixed, preventing the displacement of the end of the elastic member facing the second positioning structure 643, thereby ensuring the reliability of the reset of the retractable guiding member 7 by the elastic member.

In some embodiments of the present disclosure, as shown in FIGS. 2 to 4, the base plate 10 is provided with second mounting cavities 16 and third openings 17, where the third openings 17 are arranged in the first surface 10a and communicate with the second mounting cavities 16, and the first rollers 900 are arranged in the second mounting cavities 16 and protrude beyond the first surface 10a through the third openings 17.

By arranging the second mounting cavity 16, on one hand, the weight of the base plate 10 can be reduced, and on the other hand, a part of the first roller 900 can be accommodated, thereby reducing the overall size of the first roller 900 and the base plate 10 in the thickness direction of the base plate 10, which is conducive to the thin and lightweight design of the mover 2.

For example, the base plate 10 may be provided with fourth openings 18 in the second surface 10b, the fourth openings 18 communicate with the second mounting cavities 16, and the first rollers 900 may also protrude beyond the second surface 10b through the fourth openings 18. With a larger volume, the second mounting cavity 16 can accommodate more first rollers 900, and the size of the first roller 900 in the thickness direction of the base plate 10 can be correspondingly increased. Therefore, on one hand, the space utilization rate of the base plate 10 is increased; and on the other hand, more first rollers 900 with different sizes can be mounted on the mover 2, expanding the selection range for the first rollers 900 to adapt to different usage scenarios.

Certainly, those skilled in the art can understand that the base plate 10 may not be provided with the fourth openings 18 in the second surface 10b, that is, a side of the second mounting cavity 16 facing the second surface 10b is closed, so that the second surface 10b of the base plate 10 is neater, and the structural strength of the base plate 10 is high.

In some embodiments of the present disclosure, as shown in FIGS. 2 to 4, at least one of the first surface 10a and the second surface 10b is provided with weight-reducing groove 19. In this way, on one hand, the weight of the mover 2 can be reduced, reducing the production cost of the mover 2; and on the other hand, due to the reduced weight of the mover 2, the motion inertia of the mover 2 is small, the inertia force that needs to be overcome by the mover 2 during switching is small. Therefore, the switching of the mover 2 can be achieved under the action of small driving force, improving the switching speed and smoothness, and making the switching of the mover 2 more convenient.

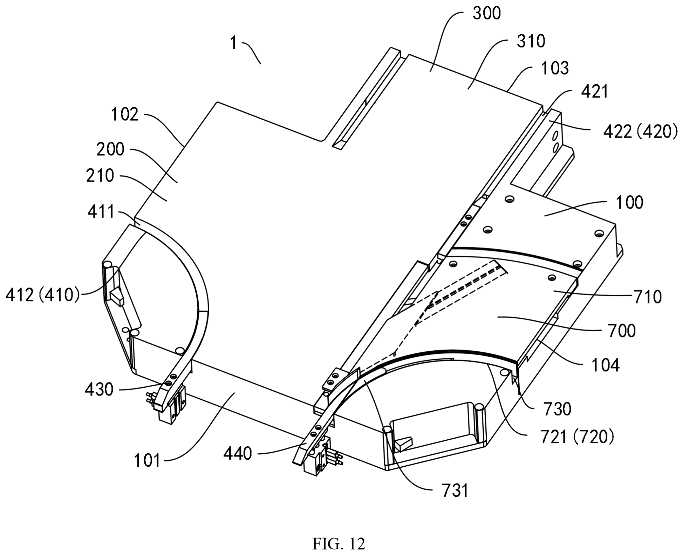

In some embodiments of the present disclosure, as shown in FIGS. 2 to 4 and FIGS. 10 to 12, the base plate 10 has a third surface 10c, which is connected between the first surface 10a and the second surface 10b and provided with a second permanent magnet array (not shown in the figure). The third surface 10c is parallel to the extension direction of the base plate 10.

Specifically, an electromagnetic steering driving member is arranged on the track switching stator 1 and arranged adjacent to a converging end 101. The electromagnetic steering driving member is magnetically coupled to the second permanent magnet array, acting on the mover 2 in a non-contact manner, and by changing the current direction of the electromagnetic steering driving member, magnetic attraction force or magnetic repulsion force is generated between the electromagnetic steering driving member and the second permanent magnet array, thereby guiding the mover 2 to move from the converging end 101 to a first conveying track 200 or guiding the mover 2 to move from the converging end 101 to a second conveying track 300.

Therefore, it can be seen that the second permanent magnet array can assist in adjusting the movement direction of the mover 2; moreover, since the second permanent magnet array is located on the third surface 10c of the mover 2, the third surface 10c is far from the first permanent magnet array 6, and the impact of the magnetic field of the second permanent magnet array on the first permanent magnet array 6 is small, thereby reducing the impact of the magnetic field on the magnetic coupling between the first permanent magnet array 6 of the mover 2 and a first armature winding 210 as well as a second armature winding 310, and ensuring the smooth movement of the mover 2 along the first conveying track 200 and the second conveying track 300.

In some embodiments of the present disclosure, the mover 2 further includes second rollers (not shown in the figure), which are rotatably arranged on the base plate 10. The rotational axes of the second rollers are perpendicular to the first surface 10a and the second surface 10b.

For example, the base plate 10 has a third surface 10c, which is connected between the first surface 10a and the second surface 10b and is parallel to the extension direction of the base plate 10, and the second rollers may be mounted on and protrude beyond the third surface 10c.

Specifically, a plurality of second rollers may be provided and may be arranged on two opposite sides of the base plate 10. When the mover 2 is located on the track switching stator 1, at least one of the second rollers is located in a first slot 411, and the second roller located in the first slot 411 is in contact with the wall of the first slot 411; and at least one of the second rollers is located in a second slot 421, and the second roller located in the second slot 421 is in contact with the wall of the second slot 421. When the mover 2 is located on the other stators of the magnetic drive conveying system 3, the second rollers are also located in the slots of the corresponding stators and are in contact with the walls of the slots.

By arranging the second rollers, the displacement space of the mover 2 in the width direction of the slot can be reduced without affecting the smooth movement of the mover 2 relative to the stator, thereby contributing to improving the positional stability of the mover 2 and the stator in the width direction of the stator, and the mover 2 is less prone to problems such as eccentricity and uneven force distribution, making movement smoother.

In some embodiments of the present disclosure, as shown in FIG. 2, a projection of the retractable guiding member 7 beyond the first surface 10a in the extended state is greater than a projection of the first roller 900 beyond the first surface 10a. In this way, when the retractable guiding member 7 are in the extended state, the first rollers 900 can come into contact with the outer surface of the stator, and the retractable guiding member 7 is inserted into the slot of the stator, which facilitates the cooperation between the mover 2 and the stator.

In a second aspect, as shown in FIG. 1, an embodiment of the present disclosure provides a magnetic drive conveying system 3, which includes the mover 2 as described above and a stator, where the stator includes tracks, and the track includes an armature winding which, when energized, magnetically couples with a first permanent magnet array 6 to drive the mover 2 to move along the track. The stator may include an arc-shaped stator or a linear stator.

In the magnetic drive conveying system 3 described in the embodiment of the present disclosure, by applying the mover 2 in the magnetic drive conveying system 3, not only can achieve the divergence of a single track or the confluence of a plurality of tracks, but also a separate deflection mechanism is not needed, thereby simplifying the structure of the magnetic drive conveying system 3 and reducing the volume.

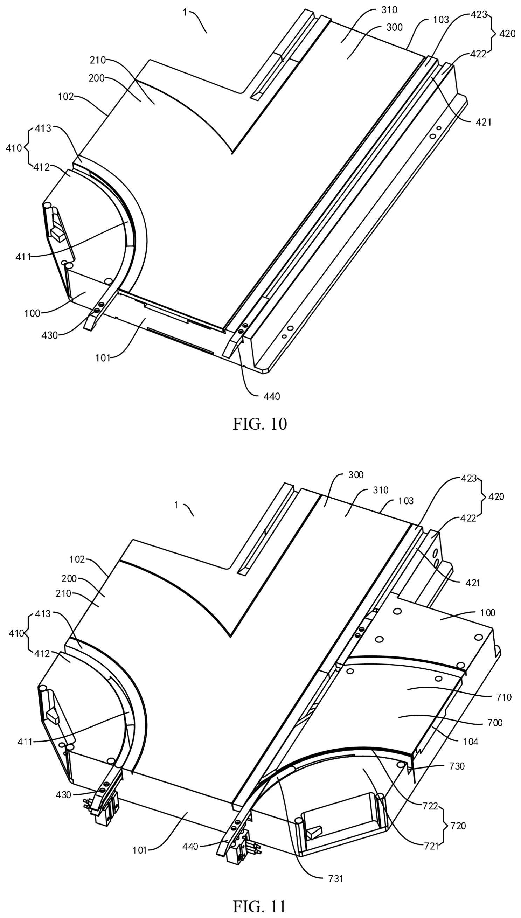

Further, as shown in FIGS. 10 to 12, the stator includes a track switching stator 1. The track switching stator 1 has a converging end 101, a first diverging end 102, and a second diverging end 103 and includes a first conveying track 200 and a second conveying track 300, where the first conveying track 200 is located between the converging end 101 and the first diverging end 102, and includes a first armature winding 210 configured to drive the mover 2 of the magnetic drive conveying system 3 to move between the converging end 101 and the first diverging end 102, and the second conveying track 300 is located between the converging end 101 and the second diverging end 103, and includes a second armature winding 310 configured to drive the mover 2 to move between the converging end 101 and the second diverging end 103.

By arranging the track switching stator 1, the mover 2 can be diverted from the converging end 101 to the first diverging end 102 and the second diverging end 103, or the mover 2 can be converged from the first diverging end 102 and the second diverging end 103 to the converging end 101, realizing the switching of the mover 2.

Further, as shown in FIG. 2, a plurality of retractable guiding members 7 are provided, at least one of the plurality of retractable guiding members 7is a first retractable guiding member 610, and at least another one is a second retractable guiding member 620. One side in the width direction of the mover 2 is provided with the first retractable guiding member 610, and the other side in the width direction of the mover 2 is provided with the second retractable guiding member 620. It should be noted that the width direction of the mover 2 is perpendicular to the thickness direction and the movement direction of the mover 2. Moreover, one or more first retractable guiding members 610 may be provided. When a plurality of first retractable guiding members 610 are provided, the plurality of first retractable guiding members 610 are arranged at intervals along the movement direction of the mover 2. One or more second retractable guiding members 620 may be provided. When a plurality of second retractable guiding members 620 are provided, the plurality of second retractable guiding members 620 are arranged at intervals along the movement direction of the mover 2. The number and positions of the plurality of first retractable guiding members 610 and the plurality of second retractable guiding members 620 can be set in a one-to-one correspondence.

As shown in FIGS. 10 to 12, the track switching stator 1 further includes a switching structure, which includes a first guiding member 410 and a second guiding member 420.

The first guiding member 410 defines a first slot 411, or the first guiding member 410 and the first conveying track 200 jointly define the first slot 411. When the mover 2 moves along the first conveying track 200, the first retractable guiding member 610 is slidably arranged in the first slot 411, and a first retractable element 430 that can be extended and retracted is arranged in the first slot 411.

For example, the first guiding member 410 includes a first stop shoulder 412, where the first stop shoulder 412 and the first conveying track 200 jointly define the first slot 411; or the first guiding member 410 includes the first stop shoulder 412 and a first abutment shoulder 413, which jointly define the first slot 411.

The second guiding member 420 defines a second slot 421, or the second guiding member 420 and the second conveying track 300 jointly define the second slot 421. When the mover 2 moves along the second conveying track 300, the second retractable guiding member 620 is slidably arranged in the second slot 421, and a second retractable element 440 that can be extended and retracted is arranged in the second slot 421.

For example, the second guiding member 420 includes a second stop shoulder 422, where the second stop shoulder 422 and the second conveying track 300 jointly define the second slot 421; or the second guiding member 420 includes the second stop shoulder 422 and a second abutment shoulder 423, which jointly define the second slot 421.

By arranging the first slot 411 to cooperate with the first retractable guiding member 610 of the mover 2, the first slot 411 can play a role in limiting and guiding the mover 2 through the first retractable guiding member 610 when the mover 2 moves along the first conveying track 200. By arranging the second slot 421 to cooperate with the second retractable guiding member 620 of the mover 2, the second slot 421 can play a role in limiting and guiding the mover 2 through the second retractable guiding member 620 when the mover 2 moves along the second conveying track 300.

It should be noted that, in the present embodiment, the first retractable element 430 is arranged in a retractable manner along the depth direction of the first slot 411. Therefore, when the first retractable element 430 is in the retracted state, the first retractable element 430 sinks to allow the first retractable guiding member 610 to be inserted into the first slot 411, and when the first retractable element 430 is in the extended state, the first retractable element 430 is lifted to allow the first retractable guiding member 610 to disengage from the first slot 411. The second retractable element 440 is arranged in a retractable manner along the depth direction of the second slot 421. Therefore, when the second retractable element 440 is in the retracted state, the second retractable element 440 sinks to allow the second retractable guiding member 620 to be inserted into the second slot 421, and when the second retractable element 440 is in the extended state, the second retractable element 440 is lifted to allow the second retractable guiding member 620 to disengage from the second slot 421. The third retractable element 731 is arranged in a retractable manner along the depth direction of the third slot 730. Therefore, when the third retractable element 731 is in the retracted state, the third retractable element 731 sinks to allow the second retractable guiding member 620 to be inserted into the third slot 730, and when the third retractable element 731 is in the extended state, the third retractable element 731 is lifted to allow the second retractable guiding member 620 to disengage from the third slot 730.

When the mover 2 moves between the converging end 101 and the first diverging end 102, the first retractable element 430 sinks, the first retractable guiding member 610 is in the extended state and inserted into the first slot 411, and the second retractable element 440 is lifted to allow the second retractable guiding member 620 to be in the retracted state.

In this way, the second retractable guiding member 620 can be drawn out of the second slot 421. Since the second retractable guiding member 620 is drawn out of the second slot 421, at this point, the first retractable guiding member 610 still remains in the first slot 411, and therefore, the mover 2 can be limited and guided by the first slot 411 at this moment, allowing the mover 2 to move along the first conveying track 200.

When the mover 2 moves between the converging end 101 and the second diverging end 103, the second retractable element 440 sinks, the second retractable guiding member 620 is in the extended state and inserted into the second slot 421, and the first retractable element 430 is lifted to allow the first retractable guiding member 610 to be in the retracted state.

In this way, the first retractable guiding member 610 can be drawn out of the first slot 411. Since the first retractable guiding member 610 is drawn out of the first slot 411, at this point, the second retractable guiding member 620 still remains in the second slot 421, and therefore, the mover 2 can be limited and guided by the second slot 421 at this moment, allowing the mover 2 to move along the second conveying track 300.

The mutual cooperation of the first retractable element 430, the second retractable element 440, the first slot 411 and the second slot 421 can assist in adjusting the movement direction of the mover 2. Moreover, compared with the applying an acting force to the mover 2 in a non-contact manner, both the first retractable element 430 and the second retractable element 440 apply acting forces to the mover 2 in a contact manner, the acting force applied to the mover 2 is continuous, stable and accurate, the movement reliability is higher, and the switching speed of the mover 2 is faster.

In some embodiments of the present disclosure, the aforementioned track switching stator 1 further has a third diverging end 104. The track switching stator 1 further includes a third conveying track 700, which is arranged on a base 100 and located between the converging end 101 and the third diverging end 104. The third conveying track 700 includes a third armature winding 710, which is configured to drive the mover 2 to move between the converging end 101 and the third diverging end 104.

In this way, the movers 2 can be diverted from the converging end 101 to any one of the first diverging end 102, the second diverging end 103, and the third diverging end 104 through the track switching stator 1, and can be converged to the converging end 101 from the first diverging end 102, the second diverging end 103 and the third diverging end 104. The track switching stator 1 can drive the mover 2 in more conveying directions, which is beneficial to applying the track switching stator 1 to a more complex magnetic drive conveying system 3.

The aforementioned switching structure includes a third guide 720, where the third guide 720 defines the third slot 730, or the third guide 720 and the third conveying track 700 jointly define the third slot 730. The third slot 730 communicates with the second slot 421, and the third retractable element 731 that can be extended and retracted is arranged in the third slot 730. The third retractable element 731, when lifted, acts on the mover 2 in a contact manner to guide the mover 2 to move from the converging end 101 to the first conveying track 200 or the second conveying track 300.

For example, the third guide 720 includes a third stop shoulder 721, where the third stop shoulder 721 and the third conveying track 700 jointly define the third slot 730; or the third guide 720 includes the third stop shoulder 721 and a third abutment shoulder 722, where the third stop shoulder 721 and the third abutment shoulder 722 jointly define the third slot 730.

The following is a description of the switching methods of the mover 2 on the track switching stator 1 when the track switching stator 1 has the third diverging end 104, with reference to the accompanying drawings.

As shown in FIG. 11, when the mover 2 is located at the converging end 101, if the mover 2 moves towards the first diverging end 102, the first retractable element 430 is in the retracted state and may be in non-contact with the first retractable guiding member 610, so that the first retractable guiding member 610 remains in the first slot 411, and the first slot 411 guides and limits the first retractable guiding member 610, allowing the mover 2 to move along the first conveying track 200 to the first diverging end 102. Moreover, the second retractable element 440 and the third retractable element 731 are in the extended state, the second retractable element 440 is in contact with the second retractable guiding member 620 and applies an acting force to the second retractable guiding member 620, so that the second retractable guiding member 620 retracts and is located outside the second slot 421, which means that the second retractable guiding member 620 disengages from the restriction of the second slot 421, and the second slot 421 does not play a role in guiding the second retractable guiding member 620, causing the movement trajectory of the mover 2 not to be limited by the second slot 421 at this moment; and at the same time, the extension of the third retractable element 731 can apply an acting force to the second retractable guiding member 620, so that the second retractable guiding member 620 maintains a retracted state and is located outside the third slot 730, preventing the second retractable guiding member 620 from being jammed into the third slot 730 and ensuring the smooth movement of the mover 2.

As shown in FIG. 11, when the mover 2 is located at the converging end 101, if the mover 2 moves towards the second diverging end 103, the second retractable element 440 is in the retracted state, the second retractable element 440 may be in non-contact with the second retractable guiding member 620, so that the second retractable guiding member 620 remains in the second slot 421, and the second slot 421 guides and limits the second retractable guiding member 620, allowing the mover 2 to move to the second diverging end 103 along the second conveying track 300. Moreover, the first retractable element 430 and the third retractable element 731 are in the extended state, the first retractable element 430 is in contact with the first retractable guiding member 610 and applies an acting force to the first retractable guiding member 610, so that the first retractable guiding member 610 retracts and is located outside the first slot 411, which means that the first retractable guiding member 610 disengages from the restriction of the first slot 411, and the first slot 411 does not play a role in guiding the first retractable guiding member 610, causing the movement trajectory of the mover 2 not to be limited by the first slot 411 at this moment; and at the same time, the extension of the third retractable element 731 can apply an acting force to the second retractable guiding member 620, so that the second retractable guiding member 620 maintains a retracted state and is located outside the third slot 730, preventing the second retractable guiding member 620 from being jammed into the third slot 730 and ensuring the smooth movement of the mover 2.

As shown in FIG. 11, when the mover 2 is located at the converging end 101, if the mover 2 moves towards the third diverging end 104, the second retractable element 440 and the third retractable element 731 are in the retracted state, and the second retractable element 440 and the second retractable guiding member 620, as well as the third retractable element 731 and the second retractable guiding member 620 can be in non-contact, so that the second retractable guiding member 620 can slide into the third slot 730 along the second slot 421, and the second slot 421 and the third slot 730 guide and limit the second retractable guiding member 620, allowing the mover 2 to move to the third diverging end 104 along the third conveying track 700. Moreover, the first retractable element 430 is in the extended state, the first retractable element 430 is in contact with the first retractable guiding member 610 and applies an acting force to the first retractable guiding member 610, so that the first retractable guiding member 610 retracts and is located outside the first slot 411, which means that the first retractable guiding member 610 disengages from the restriction of the first slot 411 and the first slot 411 does not play a role in guiding the first retractable guiding member 610, causing the movement trajectory of the mover 2 not to be limited by the first slot 411 at this moment.

The same or similar reference numerals in the accompanying drawings of the present embodiment correspond to the same or similar components. In the description of the present disclosure, it should be understood that if there are terms such as "upper," "lower," "left," and "right" indicating directional and positional relationships, they are based on the directional or positional relationships shown in the accompanying drawings, and are merely for the purpose of facilitating and simplifying the description of the present disclosure rather than indicate or imply that the indicated device or elements must have a specific direction or be constructed and operated in a specific direction. Therefore, the terms used to describe the positional relationships in the accompanying drawings are merely for illustration, and should not be construed as limiting the present disclosure. For those of ordinary skill in the art, the specific meanings of the aforementioned terms can be understood according to specific conditions.

The above are merely preferred embodiments of the present disclosure, and are not intended to limit the present disclosure. Any modifications, equivalent replacements, improvements, etc., made within the spirit and principles of the present disclosure shall fall within the protection scope of the present disclosure.

## Claims

1. A mover for a magnetic drive conveying system, comprising:
a base plate (10), having a first surface (10a) and a second surface (10b) which are arranged opposite to each other, wherein the first surface (10a) faces a stator of the magnetic drive conveying system, and the second surface (10b) faces away from the stator of the magnetic drive conveying system;
a first permanent magnet array (6), arranged on the first surface (10a);
retractable guiding members (7), arranged in a retractable manner on the base plate (10), and protruding beyond the first surface (10a) when in an extended state, with a projection of the retractable guiding member (7) beyond the first surface (10a) when in the extended state greater than a projection beyond the first surface (10a) when in a retracted state; and
first rollers (900), rotatably arranged on the base plate (10) and protruding beyond the first surface (10a), wherein rotational axes of the first rollers (900) are perpendicular to a movement direction of a mover and parallel to the first surface (10a) and the second surface (10b).

2. The mover according to claim 1, wherein the base plate (10) is provided with first mounting cavities (13) and first openings (14), wherein the first openings (14) are arranged in the first surface (10a) and communicate with the first mounting cavities (13), and the retractable guiding members (7) are arranged in the first mounting cavities (13) and protrude beyond the first surface (10a) through the first openings (14).

3. The mover according to claim 2, wherein the base plate (10) is provided with second openings (15), which are arranged in the second surface (10b), the first mounting cavity (13) comprises:
a first cavity (13a), communicating with the first opening (14); and
a second cavity (13b), communicating between the first cavity (13a) and the second opening (15), wherein a cross-sectional area of the second cavity (13b) orthographically projected onto the first surface (10a) is larger than a cross-sectional area of the first cavity (13a) orthographically projected onto the first surface (10a); and
the retractable guiding member (7) comprises a mounting portion (630) and a retractable portion (640), wherein the retractable portion (640) is connected in a retractable manner to the mounting portion (630), the mounting portion (630) is located in the second cavity (13b) and connected to an inner wall of the second cavity (13b), and when the retractable guiding member (7) is in the extended state, the retractable portion (640) passes through the first cavity (13a) and protrudes beyond the first surface (10a) through the first opening (14).

4. The mover according to claim 3, wherein the second cavity (13b) comprises:
a first sub-cavity (1311), communicating with the first cavity (13a); and
a second sub-cavity (1312), communicating between the first sub-cavity (1311) and the second opening (15), wherein a cross-sectional area of the second sub-cavity (1312) orthographically projected onto the first surface (10a) is larger than a cross-sectional area of the first sub-cavity (1311) orthographically projected onto the first surface (10a); and
the mounting portion (630) comprises a mounting base (631) and a guiding shaft (632), wherein the retractable portion (640) is connected in a retractable manner to the guiding shaft (632), the mounting base (631) is located in the second sub-cavity (1312) and connected to a bottom wall of the second sub-cavity (1312), and the guiding shaft (632) is located in the first sub-cavity (1311) and in mutual abutment with a bottom wall of the first sub-cavity (1311).

5. The mover according to claim 4, wherein the guiding shaft (632) is a linear bearing, an inner ring surface of which being drivingly connected to the retractable portion (640); or
the guiding shaft (632) comprises a shaft sleeve and a linear bearing, an outer ring surface of the linear bearing being connected to an inner ring surface of the shaft sleeve, and the inner ring surface of the linear bearing being drivingly connected to the retractable portion (640).

6. The mover according to claim 5, wherein when the guiding shaft (632) is a linear bearing, the mover in at least one of the following configurations:
configuration 1: the linear bearing is fixedly connected to the mounting base (631);
configuration 2: the linear bearing is interference-fitted with the first sub-cavity (1311); and
configuration 3: the linear bearing is clamped between the mounting base (631) and the bottom wall of the first sub-cavity (1311).

7. The mover according to claim 5, wherein when the guiding shaft (632) comprises a shaft sleeve and a linear bearing, the mover is in at least one of the following configurations:
configuration 1: the shaft sleeve is fixedly connected to the mounting base (631), and the linear bearing is interference-fitted with the shaft sleeve;
configuration 2: the shaft sleeve is interference-fitted with the first sub-cavity (1311), and the linear bearing is interference-fitted with the shaft sleeve; and
configuration 3: the shaft sleeve is clamped between the mounting base (631) and the bottom wall of the first sub-cavity (1311), and the linear bearing is interference-fitted with the shaft sleeve.

8. The mover according to claim 4, wherein the retractable portion (640) comprises:
a limiting segment (641), inserted into the guiding shaft (632) and abutting against the bottom wall of the second cavity (13b); and
a guiding segment (642), connected to the limiting segment (641), and protruding beyond the first surface (10a) through the first opening (14) when the retractable guiding member (7) is in the extended state.

9. The mover according to claim 8, wherein the limiting segment (641) comprises a linear bearing, an outer ring surface of the linear bearing being in contact with an inner ring surface of the guiding shaft (632), and the limiting segment (641) being slidable relative to the guiding shaft (632).

10. The mover according to claim 8, wherein the retractable guiding member (7) further comprises:
an elastic member, located in the guiding shaft (632), wherein one end of the elastic member abuts against the limiting segment (641), the other end of the elastic member abuts against the guiding shaft (632) or the mounting base (631), and the elastic member is compressed to have elastic force that drives the retractable portion (640) to protrude beyond the first surface (10a).

11. The mover according to claim 10, wherein an end face of the mounting base (631) facing the guiding shaft (632) is provided with a first positioning structure (633), an end face of the limiting segment (641) facing the mounting base (631) is provided with a second positioning structure (643), one end of the elastic member is connected to the first positioning structure (633), and the other end of the elastic member is connected to the second positioning structure (643).

12. The mover according to claim 11, wherein the first positioning structure (633) is at least one of a positioning groove and a positioning post; and
the second positioning structure (643) is at least one of a positioning groove and a positioning post.

13. The mover according to claim 1, wherein that the base plate (10) is provided with second mounting cavities (16) and third openings (17), the third openings (17) are arranged in the first surface (10a) and communicate with the second mounting cavities (16), and the first rollers (900) are arranged in the second mounting cavities (16) and protrude beyond the first surface (10a) through the third openings (17).

14. The mover according to claim 1, wherein at least one of the first surface (10a) and the second surface (10b) is provided with weight-reducing grooves (19).

15. The mover according to claim 1, wherein the base plate (10) has a third surface (10c), which is connected between the first surface (10a) and the second surface (10b) and provided with a second permanent magnet array.

16. The mover according to claim 1, further comprising:
second rollers, rotatably arranged on the base plate (10), with the rotational axes of the second rollers being perpendicular to the first surface (10a) and the second surface (10b).

17. The mover according to claim 1, wherein a projection of the retractable guiding member (7) beyond the first surface (10a) in the extended state is greater than a projection of the first roller (900) beyond the first surface (10a).

18. A magnetic drive conveying system, comprising:
the mover according to any one of claims 1 to 17; and
a stator, comprising tracks, wherein the track comprises an armature winding which, when energized, magnetically couples with the first permanent magnet array (6) to drive the mover to move along the track.

19. The magnetic drive conveying system according to claim 18, wherein the stator comprises:
a track switching stator (1), having a converging end (101), a first diverging end (102) and a second diverging end (103) and comprising a first conveying track (200) and a second conveying track (300), the first conveying track (200) being located between the converging end (101) and the first diverging end (102) and comprising a first armature winding (210) configured to drive the mover of the magnetic drive conveying system to move between the converging end (101) and the first diverging end (102), and the second conveying track (300) being located between the converging end (101) and the second diverging end (103) and comprising a second armature winding (310) configured to drive the mover to move between the converging end (101) and the second diverging end (103).

20. The magnetic drive conveying system according to claim 19, wherein a plurality of retractable guiding members (7) are provided, at least one of the plurality of the retractable guiding members (7) is a first retractable guiding member (610), and at least another one is a second retractable guiding member (620);
the track switching stator (1) further comprises:
a switching structure, comprising a first guiding member (410) and a second guiding member (420);
the first guiding member (410) defines a first slot (411), or the first guiding member (410) and the first conveying track (200) jointly define a first slot (411), and a first retractable element (430) that can be extended and retracted is arranged in the first slot (411); the second guiding member (420) defines a second slot (421), or the second guiding member (420) and the second conveying track (300) jointly define a second slot (421), and a second retractable element (440) that can be extended and retracted is arranged in the second slot (421);
when the mover moves between the converging end (101) and the first diverging end (102), the first retractable element (430) sinks, the first retractable guiding member (610) is in the extended state and inserted into the first slot (411), and the second retractable element (440) is lifted, causing the second retractable guiding member (620) to be in the retracted state; and
when the mover moves between the converging end (101) and the second diverging end (103), the second retractable element (440) sinks, the second retractable guiding member (620) is in the extended state and inserted into the second slot (421), and the first retractable element (430) is lifted, causing the first retractable guiding member (610) to be in the retracted state.
